# EUROPEAN PATENT SPECIFICATION

(11) **EP 4 075 003 B1**
(45) Date of publication and mention of the grant of the patent: **20.03.2024**
(21) Application number: 22163126.0
(22) Date of filing: 21.03.2022
(51) Int. Cl.: F16C 33/80, F16C 33/78, F16C 33/72

(54) **SUPPORT ASSEMBLY FOR FOOD APPLICATIONS HAVING AN IMPROVED INNER SEAL**
TRÄGERANORDNUNG FÜR LEBENSMITTELANWENDUNGEN, DIE EINE VERBESSERTE INNERE ABDICHTUNG AUFWEISEN
ENSEMBLE SUPPORT POUR DES APPLICATIONS ALIMENTAIRES DOTÉ D'UNE MEILLEURE ÉTANCHÉITÉ INTÉRIEURE

(30) Priority: 12.04.2021 IT 202100008987
(43) Date of publication of application: 19.10.2022
(73) Proprietor: Aktiebolaget SKF, 415 50 Göteborg (SE)
(72) Inventor: Bertolini, Andrea A, 54033 Carrara (IT); Baracca, Fausto, 54100 Massa (MS) (IT); Frezza, Pasquale, 81031 Aversa (IT)
(74) Representative: Tedeschini, Luca

(56) References cited:
- EP-A1- 3 425 224
- US-A1- 2014 130 618
- US-A1- 2018 100 546

## Description

### Technical field of the invention

The present invention relates to a support assembly for food applications, having a novel and improved inner seal. In particular, the support assembly is fixed to a machine frame and is intended to support movable shafts, for example rotating shafts, by means of a suitable bearing unit.

The novel inner sealing system improves the sealing performance in the presence of water and detergents at high pressure and temperature.

### Prior art

As is known, in the food industry (also known as "food and beverages", or simply "F&B") there has been an increasing interest in the development of new machines and machine designs intended to improve the safety and quality of foods.

As is also known, the machines used in the food industry have numerous moving parts supported by rotating or slidable shafts, such as conveyor belts, mixers, and machines for washing fresh foods.

Support assemblies for movable shafts may be of the terminal type, housing a terminal end of the shaft, or of the through type. These support assemblies are formed by a casing, usually annular, having a base or flange for fixing to the machine, a bearing unit, located inside the casing and coupled to the movable shaft, and a cover, normally cup-shaped, which is coupled with a force fit to the casing in such a way that a coupling portion of the cover forms a fluid seal with a radially outer lateral surface of the casing. On the opposite side to the cover, a rear sealing device is also provided, comprising a metal shield on to which is co-moulded a vulcanized rubber element equipped with a plurality of sealing lips.

On the inside, in addition to the front seal between the cover and the casing and the rear sealing device, further sealing devices, each comprising a metal shield, on to which is co-moulded a vulcanized rubber element equipped with a plurality of sealing lips, are provided to protect the bearing unit. In particular, the sealing devices are positioned on the axially outer side and on the axially inner side of the row of rolling bodies. The axially outer sealing device is usually formed by a pair of shields in which the corresponding sealing lips face each other, while the axially inner sealing device comprises a single shield (also provided with a vulcanized rubber element with sealing lips).

An example of these support assemblies is shown in US2018100546A1.

All these machines have to be cleaned frequently, usually with water to which detergents and/or disinfectants have been added, in order to control any development of bacterial colonies that might contaminate the foods. In particular, these machines must not have any gaps or other parts where dirt, or even the washing water, can penetrate and stagnate. This is because the stagnation of liquids or moisture favours a possible proliferation of bacteria.

In particular, in order to obtain certification for the IPx9k test, the support assembly must withstand high-pressure jets of hot water. Tests conducted on the known solutions have revealed that the rear part of the support assembly, opposite the cover, does not withstand the conditions set by the test specifications. In other words, the lips of the axially inner seal do not ensure sealing for the water conditions specified below:
- pressure: 80/100 bar
- jet: 10/15 cm
- temperature: 80°C
- flow rate: 14/16 l/min
- time: 2 mins.

Most of the water enters the rear part of the assembly through the lips of the rear sealing device. In particular, the high-pressure water jet enters the interior of the support assembly because it lifts the lips of the rear sealing device. More particularly, because of the high-pressure water jet the first lip (the axially outer one) is lifted partially because the interference is less than that of the second, axially inner, lip. The problem of the second lip is that, owing to its shape, it can easily be lifted by the water because of the flexibility of the rubber. This problem is further aggravated by the fact that the bearing unit has a less effective sealing device in its axially inner part. Consequently, the water entering through the rear sealing device of the support assembly also enters the interior of the bearing unit, where it reaches the lubricant and retaining cage. Thus the support assembly cannot pass the certification test.

It is therefore necessary to define a support assembly that offers a novel design solution capable of resolving, or at least mitigating, the aforementioned drawbacks.

### Brief description of the invention

In order to substantially resolve the aforementioned technical problems, one object of the present invention is to define a novel support assembly for food applications, particularly a support assembly for a rotating shaft and a corresponding bearing unit fixed to a machine frame.

For this purpose, according to one aspect of the present invention, in order to improve the fluid sealing performance of the support assembly on its inner side, that is to say on the opposite side to the cover, the radially inner ring of the bearing unit is provided with a step that extends in an axially inward direction and enables a further shield, in addition to the existing shields, to be accommodated, so as to provide a more effective axially inner seal. The novel solution therefore consists of a modification of the radially inner ring, with a novel step and a greater length.

Therefore, according to the present invention, a support assembly for food applications is provided, with the characteristics stated in the independent claim appended to the present description.

Further preferred and/or particularly advantageous embodiments of the invention are described according to the characteristics stated in the appended dependent claims.

### Brief description of the drawings

The invention will now be described with reference to the attached drawing, which shows a non-limiting example of its embodiment, in which:
- Figure 1 shows a cross section through the support assembly according to an embodiment of the present invention, and

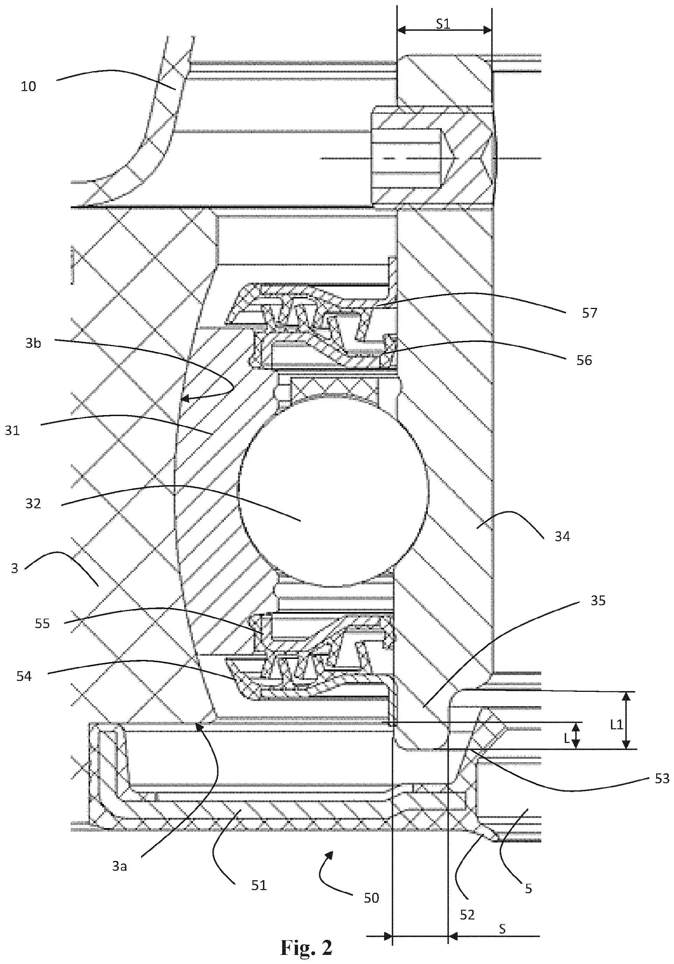

- Figure 2 shows a detail of Figure 1 on an enlarged scale.

### Detailed description

Purely by way of non-limiting example and with reference to the aforesaid figures, the number 1 indicates the whole of a support assembly for movable, rotating or slidable shafts which, for the sake of simplicity, are not illustrated.

The support assembly 1 comprises a bearing unit 30, for example a rolling bearing unit of a known type, which in turn comprises a radially outer ring 31, a radially inner ring 34, and a row of rolling elements 32, such as balls, interposed between said rings. The bearing unit 30 is capable of receiving, in a known way, a movable shaft 5, such as a rotating shaft, in order to support it. The support assembly 1 further comprises a casing 3 within which the bearing unit 30 is housed in a stable and known way.

The support assembly 1 is, in particular, intended to be mounted on machines for the food industry. For this purpose, the casing 3 is of the type intended to be mounted in a fixed way on the frame of a known machine, particularly for the food industry, which for the sake of simplicity is not illustrated. The casing 3 has an annular overall shape, and is designed so as to be able to receive the bearing unit 30 in a known way within itself, particularly in the through seat 4. The seat 4 has an overall axis of symmetry X which is also the axis of symmetry of the casing 3.

The support assembly 1 again comprises a cover 10 for fluid sealing an opening 11 of a through seat 4 of the casing 3.

The cover 10 for the casing 3 is bowl-shaped overall and comprises a bottom wall 12, an annular lateral wall 13 extending transversely relative to the bottom wall 12, and a coupling portion 14 towards the casing 3.

The coupling portion 14 is annular and is designed to be coupled, in use, to the casing 3, laterally on the outside of said casing. In particular, it is shaped as a socket joint and is coupled radially and laterally on to the outside of a radially outer lateral surface 16 of the casing 3.

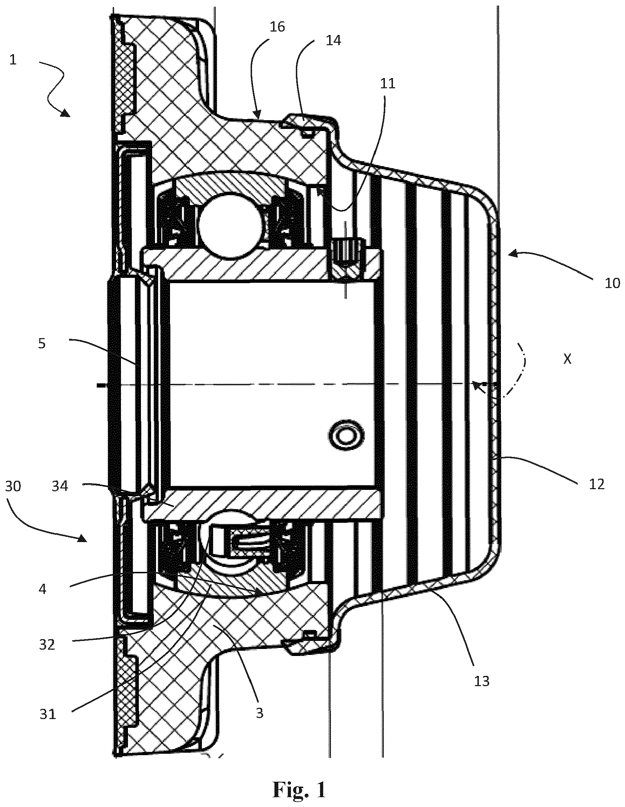

The lateral surface 16 and the coupling portion 14 are defined by solids of revolution, and have a common axis of symmetry, which, in the illustrated examples, coincides with an axis of symmetry X (Figure 1) of the cover 10, and which is also the axis of symmetry of the casing 3 and of the through seat 4.

Throughout the present description and the claims, terms and expressions indicating positions and orientations such as "radial" and "axial" are to be interpreted as relative to the central axis of rotation X of the bearing unit 30. On the other hand, expressions such as "axially outer" and "axially inner" relate to the assembled condition of the support assembly, and in the present case preferably relate to a cover side and to a side opposite the cover side, respectively.

In addition to the fluid seal formed between the cover 10 and the casing 3, the support assembly 1 is also provided with a rear sealing device 50, placed on the opposite side to that of the cover 10, and comprising a metal shield 51 on which is co-moulded a vulcanized rubber liner equipped with a pair of sealing lips, particularly a first, axially outer, sealing lip 52 and a second, axially inner, sealing lip 53. The sealing device 50 is interference fitted on the casing 3 and is in sliding contact with the shaft 5.

Additionally, inside the support assembly 1, there are further sealing devices, each of which also comprises a metal shield on to which is co-moulded a vulcanized rubber element equipped with a plurality of sealing lips, for the purpose of protecting the bearing unit 30. In particular, the sealing devices are positioned both on the axially outer side and on the axially inner side of the row of rolling bodies 32. The axially inner sealing device comprises a single shield 55, on to which is co-moulded a vulcanized rubber liner having a plurality of sealing lips. The shield 55 is interference fitted on to the radially outer ring 31 of the bearing unit 30, and is in sliding contact with the radially inner ring 34.

On the other hand, the axially outer sealing device comprises a first shield 56, on to which is co-moulded a vulcanized rubber liner having a plurality of sealing lips, and a second shield 57, on to which is also co-moulded a vulcanized rubber lining having a plurality of sealing lips. The shield 56 is interference fitted on to the radially outer ring 31 of the bearing unit 30, and is in sliding contact with the radially inner ring 34, while the shield 57 is interference fitted on to the radially inner ring 34 without being in sliding contact with the radially outer ring 31. The corresponding pluralities of lips of the first shield 56 and the second shield 57 face each other to form a kind of labyrinth seal, or "gutter seal", on the axially outer side of the bearing unit 30.

According to one aspect of the present invention, in order to improve the fluid sealing performance of the support assembly 1 on its axially inner side, that is to say on the opposite side to the cover 10, the radially inner ring 34 of the bearing unit 30 is provided with a step 35 that extends in an axially inward direction and enables a further shield 54, also provided with a vulcanized rubber element co-moulded on to the shield and having a plurality of sealing lips, to be accommodated by interference mounting, in addition to the existing shields, so as to provide a more effective axially inner seal. The aim is therefore to increase the length of the radially inner ring 34 of the bearing unit 30 so that this further shield 54 can be inserted into the rear part of the bearing unit. The corresponding pluralities of lips of the shield 55 and of the second shield 54 face each other so that they form a kind of labyrinth seal, or "gutter seal", on the axially inner side of the bearing unit 30 as well.

The step 35 of the radially inner ring 34 is also characterized by some fundamental dimensions. In the first place, the thickness S of the step 35 must be greater than 0.5 × S1, S1 being the thickness of the radially inner ring 34. This is to allow the interference mounting of the further shield 54 without causing problems of resistance and/or deformation.

Additionally, the projection L of the step 35 relative to an axially inner wall 3a of the casing 3 must be greater than 1.5 mm, to allow the provision of a flat surface of the step 35 that is sufficient for mounting the further shield 54, while also allowing the formation of a kind of labyrinth with the rear sealing device 50.

Finally, the overall length L1 of the step 35 must be designed so that the minimum distance between the step 35 and the second lip 53 of the rear sealing device 50 is not less than 0.2 mm, in order to ensure that there is no contact between the step 35 and the second lip 53 of the rear sealing device 50.

The novel design has two main characteristics:
- the first, and more important, characteristic is the further shield 54 on the reverse of the bearing unit 30. The sealing performance of the whole support assembly is notably improved because, even if water enters from the lips of the rear sealing device, it must pass through the whole "gutter" sealing device formed by the shield 55 and the further shield 54 before it can enter the bearing unit;
- the second characteristic is the step 35 of the radially inner ring 34. The step 35, in its turn, has a number of important characteristics:
   a) it increases the length of the radially inner ring so as to allow the assembly of the further shield 54;
   b) it automatically protects the bearing unit because water entering the interior rebounds against the surfaces of the radially inner ring (or rather, of its step 35) and remains in the vicinity of the lips of the rear sealing device 50, distant from the novel "gutter" sealing device;
   c) when the shaft is mounted, the second and main lip of the rear sealing device is lifted, particularly during the washing procedure carried out according to the test with a high-temperature, high-pressure water jet. Because of this lifting and the elongate shape of the radially inner ring, a labyrinth is created between the second lip 53 of the rear sealing device 50 and the step 35 of the radially inner ring 34. The higher the lip is, the smaller the labyrinth becomes, and the greater is the protection of the support assemblies.

Additionally, the novel step 35 is also compatible with a 2° rotation of the bearing unit 30 within the spherical seat 3b of the casing 3, because, in this condition also, the step 35 and the second lip 53 of the rear sealing device 50 are not in contact.

Finally, the introduction of the step 35 of the radially inner ring 34 and the introduction of the further shield 54 yield the following benefits:
- better sealing of the bearing unit,
- higher resistance to contaminants,
- the obtaining of IPx9k certification for the support assemblies,
- an improvement in the sealing performance of the whole support assembly.

In addition to the embodiment of the invention as described above, it is to be understood that there are numerous other variants. It is also to be understood that these embodiments are provided solely by way of example and do not limit the object of the invention or its applications or its possible configurations. On the contrary, although the description given above enables a person skilled in the art to implement the present invention according to at least one example of its embodiment, it is to be understood that numerous variations of the components described are possible without departure from the object of the invention as defined in the appended claims.

## Claims

1. Support assembly (1) for a rotating shaft (5), comprising a bearing unit (30) adapted to receive the rotating shaft, a casing (3) and a cover (10) for fluid sealing an opening (11) of an internal seat (4) of the casing (3);
the bearing unit (30) comprising a radially outer ring (31), a radially inner ring (34) and a row of rolling bodies (32) between the radially outer ring (31) and the radially inner ring (34);
the support assembly (1) also being provided with:
- a rear sealing device (50), placed on the opposite side of the bearing unit (30) with respect to the cover (10), and comprising a metal screen (51) and a vulcanized rubber liner equipped with a first sealing lip (52) axially outer and with a second sealing lip (53), axially inner;
- a sealing device axially internal in direction towards the rear sealing device (50), with respect to the row of rolling bodies (32) comprising a single screen (55) provided with a vulcanized rubber liner having a plurality of sealing lips;
the support assembly (1) being **characterized in that**, from the opposite side of the bearing unit (30) with respect to the cover (10), the radially inner ring (34) is provided with a step (35) reducing the thickness of the inner ring (34) on its inner peripheral surface, the step extending with an overall length L1 in an axially internal direction towards the rear sealing device (50) and on which it is accommodated a further shield (54), provided with a vulcanized rubber liner having a plurality of sealing lips.

2. Support assembly (1) according to claim 1, wherein the respective plurality of lips of the shield (55) and the further shield (54) face each other realizing a labyrinth seal.

3. Support assembly (1) according to claim 1 or 2, in which the further screen (54) is mounted with interference on the step (35) of the radially inner ring (34).

4. Support assembly (1) according to any of the preceding claims, in which the thickness (S) of the step (35) of the radially inner ring (34) is greater than 0.5 x S1, (S1) being the thickness of the radially inner ring (34).

5. Support assembly (1) according to any of the preceding claims in which the protrusion (L) of the step (35) with respect to an axially internal wall (3a) of the casing (3) is greater than 1.5 mm.

6. Support assembly (1) according to one of the preceding claims, in which the overall length (L1) of the step (35) ensures that the minimum distance between the step (35) and the second lip (53) of the rear seal device (50) is not less than 0.2 mm.

7. Support assembly (1) according to any of the preceding claims, in which the step (35) and the second lip (53) of the rear sealing device (50) are not in contact even if the bearing unit (30) is rotated up to 2° inside a spherical seat (3b) of the casing (3).

## Patentansprüche

1. Trägeranordnung (1) für eine drehende Welle (5), umfassend eine Lagereinheit (30), die dazu ausgebildet ist, die drehende Welle aufzunehmen, ein Gehäuse (3) und eine Abdeckung (10) für Fluid, die eine Öffnung (11) eines internen Sitzes (4) des Gehäuses (3) abdichtet;
wobei die Lagereinheit (30) einen radial äußeren Ring (31), einen radial inneren Ring (34) und eine Reihe von Rollenkörpern (32) zwischen dem radial äußeren Ring (31) und dem radial inneren Ring (34) umfasst;
wobei die Trägeranordnung (1) auch versehen ist mit:
- einer hinteren Dichtungsvorrichtung (50), in Bezug auf die Abdeckung (10) angeordnet auf der gegenüberliegenden Seite der Lagereinheit (30), und umfassend einen Metallschirm (51) und eine vulkanisierte Gummiauskleidung, ausgestattet mit einer ersten Dichtungslippe (52), axial außen, und mit einer zweiten Dichtungslippe (53), axial innen;
- einer Dichtungsvorrichtung, axial innen in Richtung der hinteren Dichtungsvorrichtung (50), in Bezug auf die Reihe der Rollenkörper (32), umfassend einen einzelnen Schirm (55), versehen mit einer vulkanisierten Gummiauskleidung mit einer Vielzahl von Dichtungslippen;
wobei die Trägeranordnung (1) **dadurch gekennzeichnet ist, dass**, in Bezug auf die Abdeckung (10) von der entgegengesetzten Seite der Lagereinheit (30), der radial innere Ring (34) mit einer Stufe (35) versehen ist, die die Dicke des inneren Rings (34) auf seiner Innenumfangsfläche reduziert, wobei sich die Stufe mit einer Gesamtlänge L1 in einer axial inneren Richtung zu der hinteren Dichtungsvorrichtung (50) erstreckt, auf der ein weiterer Schirm (54) untergebracht ist, der mit einer vulkanisierten Gummiauskleidung mit einer Vielzahl von Dichtungslippen versehen ist.

2. Trägeranordnung (1) nach Anspruch 1, wobei die entsprechende
Vielzahl von Lippen des Schirms (55) und des weiteren Schirms (54) einander zugewandt sind, eine Labyrinthdichtung realisierend.

3. Trägeranordnung (1) nach Anspruch 1 oder 2, in welcher der weitere Schirm (54) mit Interferenz auf der Stufe (35) des radial inneren Rings (34) montiert ist.

4. Trägeranordnung (1) nach einem der vorangehenden Ansprüche, in welcher die Dicke (S) der Stufe (35) des radial inneren Rings (34) größer als 0,5 × S1 ist, wobei (S1) die Dicke des radial inneren Rings (34) ist.

5. Trägeranordnung (1) nach einem der vorangehenden Ansprüche, in welcher der Vorsprung (L) der Stufe (35) mit Bezug auf eine axial innere Wand (3a) des Gehäuses (3) größer als 1,5 mm ist.

6. Trägeranordnung (1) nach einem der vorangehenden Ansprüche, in welcher die Gesamtlänge (L1) der Stufe (35) sicherstellt, dass der Mindestabstand zwischen der Stufe (35) und der zweiten Lippe (53) der hinteren Dichtungsvorrichtung (50) nicht kleiner als 0,2 mm ist.

7. Trägeranordnung (1) nach einem der vorangehenden Ansprüche, in welcher die Stufe (35) und die zweite Lippe (53) der hinteren Dichtungsvorrichtung (50) nicht in Kontakt sind, selbst wenn die Lagereinheit (30) in einem runden Sitz (3b) des Gehäuses (3) um bis zu 2° gedreht ist.

## Revendications

1. Ensemble support (1) pour un arbre rotatif (5), comprenant une unité de palier (30) conçue pour recevoir l'arbre rotatif, une enveloppe (3) et un couvercle (10) pour sceller de manière étanche au fluide une ouverture (11) d'un siège intérieur (4) de l'enveloppe (3) ;
l'unité de palier (30) comprenant une bague radialement externe (31), une bague radialement interne (34) et une rangée de corps de roulement (32) entre la bague radialement externe (31) et la bague radialement interne (34) ;
l'ensemble support (1) étant également pourvu :
- d'un dispositif d'étanchéité arrière (50), placé sur le côté opposé de l'unité de palier (30) par rapport au couvercle (10), et comprenant un écran métallique (51) et une garniture en caoutchouc vulcanisé équipée d'une première lèvre d'étanchéité (52) axialement externe et d'une deuxième lèvre d'étanchéité (53), axialement interne ;
- d'un dispositif d'étanchéité axialement intérieur en direction du dispositif d'étanchéité arrière (50), par rapport à la rangée de corps de roulement (32) comprenant un seul écran (55) pourvu d'une garniture en caoutchouc vulcanisé ayant une pluralité de lèvres d'étanchéité ;
l'ensemble support (1) étant **caractérisé en ce que**, à partir du côté opposé de l'unité de palier (30) par rapport au couvercle (10), la bague radialement interne (34) est pourvue d'un pas (35) réduisant l'épaisseur de la bague interne (34) sur sa surface périphérique interne, le pas s'étendant avec une longueur globale L1 dans une direction axialement interne vers le dispositif d'étanchéité arrière (50) et sur laquelle est logé une autre protection (54), pourvue d'une garniture en caoutchouc vulcanisé ayant une pluralité de lèvres d'étanchéité.

2. Ensemble support (1) selon la revendication 1, dans lequel la pluralité respective de lèvres de la protection (55) et l'autre protection (54) se font face, réalisant un joint à labyrinthe.

3. Ensemble support (1) selon la revendication 1 ou la revendication 2, dans lequel l'autre écran (54) est monté avec une interférence sur le pas (35) de la bague radialement interne (34).

4. Ensemble support (1) selon l'une quelconque des revendications précédentes, dans lequel l'épaisseur (S) du pas (35) de la bague radialement interne (34) est supérieure à 0,5 x S1, (S1) étant l'épaisseur de la bague radialement interne (34).

5. Ensemble support (1) selon l'une quelconque des revendications précédentes, dans lequel la saillie (L) du pas (35) par rapport à une paroi axialement interne (3a) de l'enveloppe (3) est supérieure à 1,5 mm.

6. Ensemble support (1) selon l'une des revendications précédentes, dans lequel la longueur totale (L1) du pas (35) assure que la distance minimale entre le pas (35) et la deuxième lèvre (53) du dispositif d'étanchéité arrière (50) n'est pas inférieure à 0,2 mm.

7. Ensemble support (1) selon l'une quelconque des revendications précédentes, dans lequel le pas (35) et la deuxième lèvre (53) du dispositif d'étanchéité arrière (50) ne sont pas en contact même si l'unité de palier (30) est mise en rotation jusqu'à 2° à l'intérieur d'un siège sphérique (3b) de l'enveloppe (3) .
